# EUROPEAN PATENT SPECIFICATION

(11) **EP 2 847 512 B1**
(45) Date of publication and mention of the grant of the patent: **17.07.2019**
(21) Application number: 13788354.2
(22) Date of filing: 07.05.2013
(51) Int. Cl.: F21V 5/08, F21K 99/00, F21V 5/04, F21V 7/00, G02B 19/00

(54) **LENS FOR PREFERENTIAL-SIDE DISTRIBUTION**
LINSE FÜR BEVORZUGTE SEITENVERTEILUNG
LENTILLE POUR DISTRIBUTION LATÉRALE PRÉFÉRENTIELLE

(30) Priority: 07.05.2012 US 201213466076
(43) Date of publication of application: 18.03.2015
(73) Proprietor: Cree, Inc., Durham, NC 27703 (US)
(72) Inventor: CASTILLO, Mario Alberto, New Braunfels, Texas 78130 (US)
(74) Representative: Caspary, Karsten
(86) International application number: PCT/US2013/039889
(87) International publication number: WO 2013/169736

(56) References cited:
- WO-A1-86/00146
- US-A1- 2010 027 271
- US-A1- 2010 271 829
- US-A1- 2010 295 071
- US-A1- 2010 302 786
- US-A1- 2011 026 247
- US-A1- 2011 103 070
- US-A1- 2011 110 098
- US-A1- 2011 115 360
- US-A1- 2011 164 425
- US-A1- 2011 164 425

## Description

### FIELD OF THE INVENTION

The invention relates generally to the field of lighting systems and, more particularly, to apparatus for utilizing LED light sources for illuminating areas with a predefined pattern of light intensity.

### BACKGROUND OF THE INVENTION

There is a need for lighting apparatus which is low-cost and energy efficient. LEDs (light-emitting diodes) provide light sources which are energy efficient, and advances in LED technology are providing even greater such efficiencies over time. Some typical applications for lighting systems are roadway and parking lot lighting in which there are performance requirements such as the requirement that light be uniformly distributed over areas which are to be lighted while the neighboring regions are to be substantially free of light spillage. In applications such as the "front-line" illumination of automobile sales lots, there is a need to direct light in order to draw particular customer attention to featured vehicles displayed in the front line of a sales lot.

US 2011/0110098 A1 and US 2011/0164425 A1 disclose lenses having the features of the preamble of claim 1.

### SUMMARY OF THE INVENTION

One aspect of this invention is an improved lens for directing a majority of light from a light emitter toward a preferential side. The emitter, having an axis, may include at least one light-emitting diode (LED). Such emitters may include an LED package which has a primary lens over the at least one LED. In such embodiments, the inventive lens may be a secondary lens placed over the primary lens.

According to the invention, a lens includes a base forming an opening to a cavity defined by an inner surface and a reflecting surface positioned to reflect light received from the inner surface toward a main output surface which is transverse the axis. The opening may receive the emitter therethrough such that the cavity may be surrounding the emitter.

According to the invention, the cavity opening is substantially rectangular with each of four sides being straight between curved corners. The term "substantially rectangular," as used herein with respect to the cavity opening, means (1) that the cavity opening has four sides and (2) that at least about one-third of the cross-dimension of each side of the cavity opening is straight or that at least about one-third of the cross-dimension of the longer sides (if there is a pair of longer sides) is substantially straight. (It should be recognized that the "square" is a subset of" rectangular.") In certain embodiments, at least about half of the cross-dimension of each side is substantially straight, and it has been found advantageous to have at least about two-thirds of the cross-dimension of each side being straight.

In some of the embodiments with a substantially rectangular cavity opening, at least about half of the cross-dimension of each side of the cavity opening is straight. In some other versions of such embodiments, at least about two-thirds of the cross-dimension of each side of the cavity opening is straight.

In certain embodiments, the inner surface may be configured for primarily refracting emitter light and includes a surrounding inner surface which extends from the opening and terminates at an inner end surface which is transverse the axis and is positioned to refract light from the emitter toward the preferential side. In some of such embodiments, the surrounding inner surface extends from the opening substantially parallel to the emitter axis.

It should be noted that while rounded corners of the cavity opening and of the surrounding inner wall do not impact the distribution of light in a significant way, such rounding provides advantages during manufacturing of the inventive lens. In particular, the minimizing of sharpness at corners facilitates accurate molding of the inventive lens.

The base defines a plane substantially normal to the axis. In embodiments of the lens which are configured for directing light toward the preferential side, the inner end surface extends between front and back edges, the back edge being farther from the plane than the front edge. In such embodiments, the inner end surface may include front and back facets angled with respect to one another and each extending from the respective one of the front and back edges to a centrally-located side-to-side juncture. In some of these embodiments, the inner end surface includes a pair of each of the front and back facets, the facets of each pair being adjoined along a centrally-located front-to-back juncture and extending from the front-to-back juncture toward the base. In some versions of the inner end surface, the front and back facets are substantially planar.

In some embodiments of the inventive lens, the reflecting surface extends from the base away from the axis radially outwardly of and around the inner surface. The reflecting surface may include front and back curvatures and a pair of substantially-identical lateral curvatures each adjoining the front and back curvatures. The front curvature has a front-curvature configuration which differs from the configuration of the back curvature. Configuration of the lateral curvatures differs from configurations of the front and back curvatures. It should be understood that the term "curvature" refers to a three-dimensional curved surface.

The reflecting surface extends from a base edge toward the main output surface. And, in the embodiments with the substantially rectangular cavity opening, the base edge is substantially equidistantly spaced from a respective side of the cavity opening. In other words, the base edge of the reflecting surface may also be substantially rectangular around the substantially rectangular cavity opening.

Another aspect of the rounded corners of the cavity opening and the base edge of the reflecting surface is that such rounding provides smooth transition from the lateral curvatures to the front and back curvatures.

In the embodiments of the lens configured for preferential-side light distribution, the back curvature terminates at greater distances from the base plane than does the front curvature. The front and back curvatures are preferably each bilaterally symmetric.

In certain of the embodiments of the lens for preferential-side light distribution, the main output surface is configured for directing light toward the preferential side. In certain of such embodiments, the main output surface includes front and back sectors, the front sector spanning greater than 180° about the emitter axis. The front and back sectors may each be bilaterally symmetric along a front-to-back plane which includes the emitter axis.

In some of such embodiments, the main output surface is disposed at distances from the base plane which are greatest along the back of the back sector and gradually decrease toward the front of the front sector.

The main output surface has an edge including back-sector and front-sector portions. In some variants, a projection of the front-sector edge portion on the base plane extends along a circle. The back-sector edge portion may be substantially linear and extend between the ends of the front-sector edge portion.

In certain embodiments, the main output surface includes a singularity point on a front-to-back plane which includes the emitter axis. In some of such embodiments, the front sector includes a convex curvature extending from the singularity point. The back sector may also include a convex curvature extending from the singularity point, the back sector adjoining the front sector along planes each of which includes the singularity point and one of the ends of the front-sector edge portion. The singularity point may be offset from the emitter axis toward the preferential side. In some embodiments, the front and back sectors are each bilaterally symmetric along the front-to-back plane which includes the emitter axis.

When the inventive lens is installed in a lighting fixture for illuminating a front line of an automobile sales lot, the side-facing configuration of the facets of the inner end surface in combination with the configuration of the main output surface facilitate directing light for an extended distance along the front line of the lot. In such applications, the combination of the reflecting surface and the configuration of the main output surface minimizing back light with a desirable cut-off at a light pole with maximum illumination of the front line and minimal light directed beyond the front line. This creates a long and narrow illumination pattern that meets the needs for front-line illumination of automobile sales lots, but may also be used for illuminating similar areas, such as single-lane streets.

The inventive lens may further include an outer surrounding-wall surface which extends from the main output surface toward the base plane. In some embodiments, the outer surrounding-wall surface is substantially cylindrical and substantially parallel to the emitter axis. An outward flange may extend from the outer surrounding-wall surface away from the emitter axis.

In certain embodiments, the inventive lens is bilaterally symmetric in a front-to-back direction.

The term "transverse," as used herein in reference to the inner end surface and the main output surface with respect to the emitter axis, means that these surfaces intersect the emitter axis. In some of such embodiments, the inner end surface and the main output surface are each substantially normal to the emitter axis.

In descriptions of this invention, including in the claims below, the terms "comprising," "including" and "having" (each in their various forms) and the term "with" are each to be understood as being open-ended, rather than limiting, terms.

### BRIEF DESCRIPTION OF THE DRAWINGS

FIGURE 1 is a transparent perspective view of one embodiment of the lens of the present invention showing the lens from the light-output side.
FIGURE 2 is a transparent perspective view showing the lens of FIGURE 1 from the base side.
FIGURE 3 is a transparent output-side plan view of the embodiment of the lens of FIGURE 1.
FIGURE 4 is a transparent base-side plan view of the embodiment of the lens of FIGURE 1.
FIGURE 5 is a transparent lateral elevation of the embodiment of the lens of FIGURE 1.
FIGURE 6 is a transparent front elevation of the embodiment of the lens of FIGURE 1.
FIGURE 7 is a transparent back elevation of the embodiment of the lens of FIGURE 1.
FIGURE 8 is an opaque perspective view showing the lens of FIGURE 1 from the light-output side.
FIGURE 9 is an opaque perspective view showing the lens of FIGURE 1 from the base side.
FIGURE 10 is an opaque output-side plan view of the lens of FIGURE 1.
FIGURE 11 is an opaque base-side plan view of the lens of FIGURE 1.
FIGURE 12 is an opaque lateral elevation of the lens of FIGURE 1.
FIGURE 13 is an opaque front elevation of the lens of FIGURE 1.
FIGURE 14 is an opaque back elevation of the lens of FIGURE 1.
FIGURE 15 is a side-to-side sectional view of the lens of FIGURE 1, taken along section 15-15 shown in FIGURE 3.
FIGURE 16 is another side-to-side sectional view illustrating lateral aspects of the light distribution of the lens.
FIGURE 17 is a front-to-back sectional view of the lens of FIGURE 1, taken along section 17-17 shown in FIGURE 4.
FIGURE 18 is another front-to-back sectional view representing the preferential-side light distribution of the lens.
FIGURE 19 is a ray-trace illustrating lateral light output of the lens as shown in FIGURE 16.
FIGURE 20 is a ray-trace schematically illustrating preferential-side light output of the lens as shown in FIGURE 18.
FIGURE 21 is a side view of a three-dimensional polar intensity distribution by the inventive lens.
FIGURE 22 is a top view of a three-dimensional polar intensity distribution by the inventive lens.
FIGURE 23 is a bottom view of a three-dimensional polar intensity distribution by the inventive lens.
FIGURE 24 is a two-dimensional ISO plot of illumination intensity distribution by the inventive lens on an illuminated surface substantially normal to the emitter axis.
FIGURE 25 is a fragmentary base-side plan view of an alternative embodiment illustrating a variant of the substantially rectangular cavity opening.
FIGURE 26 is another fragmentary base-side plan view of another alternative embodiment illustrating another variant of the substantially rectangular cavity opening.
FIGURE 27 is a side elevation of an alternative embodiment of the lens according to the present invention.
FIGURE 28 is a side-to-side sectional view illustrating lateral aspects of the light distribution of the lens of FIGURE 27.
FIGURE 29 is an enlarged perspective view of one example of an LED package and including an array of eight LEDs on a submount and an asymmetric primary lens overmolded over the LED array.
FIGURE 30 is an enlarged perspective view of another example of an LED package and including an array of forty-eight LEDs on a submount and an asymmetric primary lens overmolded over the LED array.
FIGURE 31 is an enlarged perspective of yet another example of an LED package which has a single LED on a submount with a hemispheric primary lens overmolded over the LED.
FIGURE 32 is an enlarged side view of the LED package of FIGURE 31.
FIGURE 33 is an enlarged top view of the LED package of FIGURE 31.
FIGURE 34 is an enlarged top view of another exemplary LED package including an array of four LEDs on a submount and a hemispheric primary lens overmolded over the LED array such that the axis of the primary lens is offset from the axis of the LED array.

### DETAILED DESCRIPTION OF ILLUSTRATED EMBODIMENTS

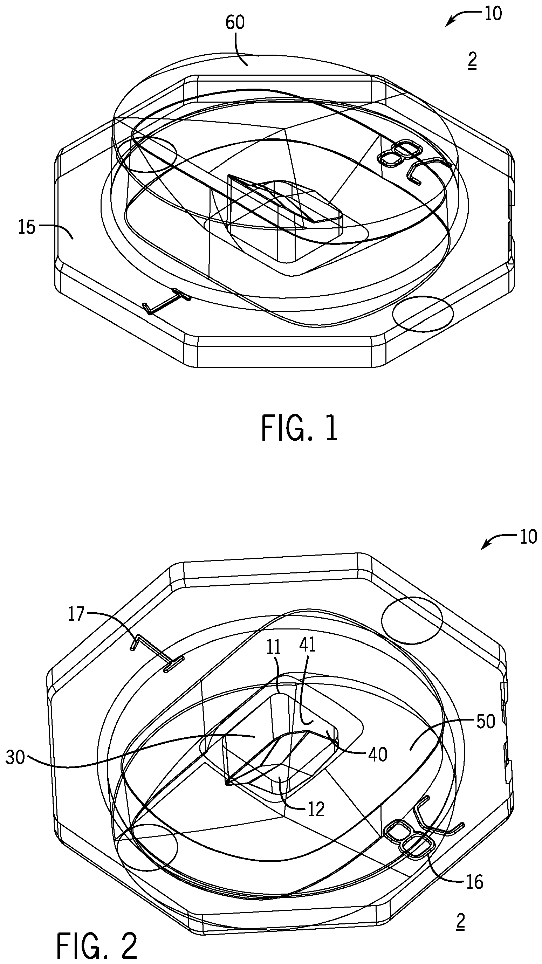

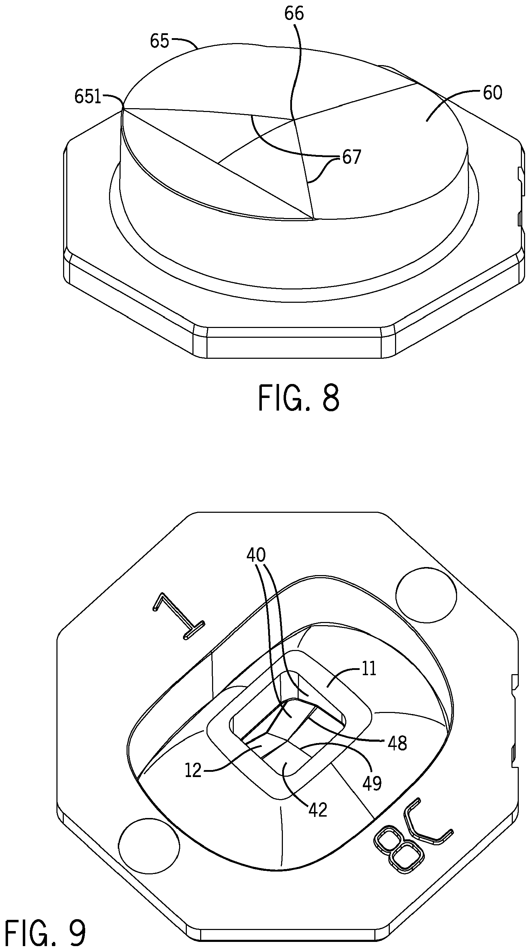

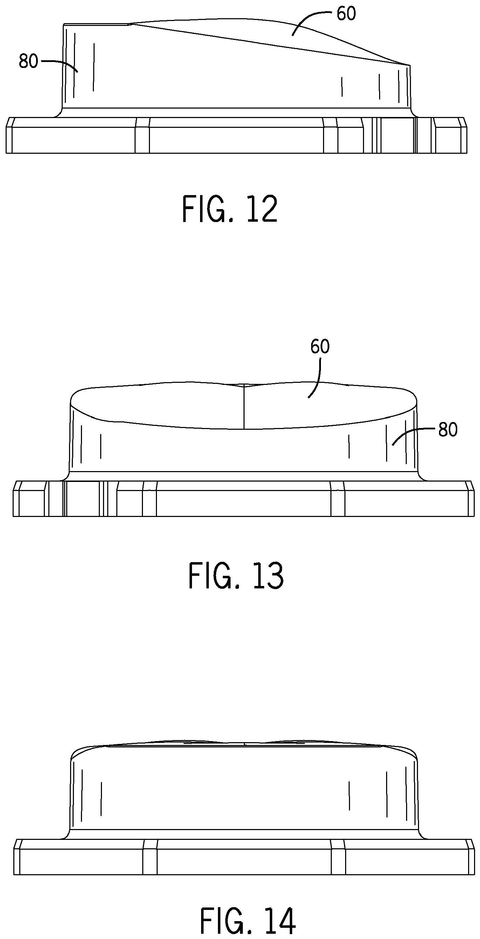

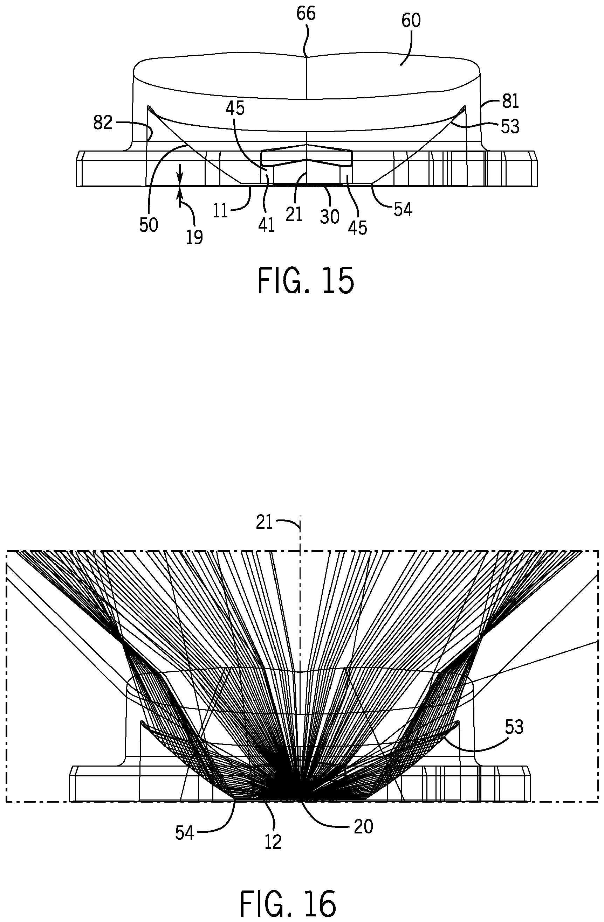

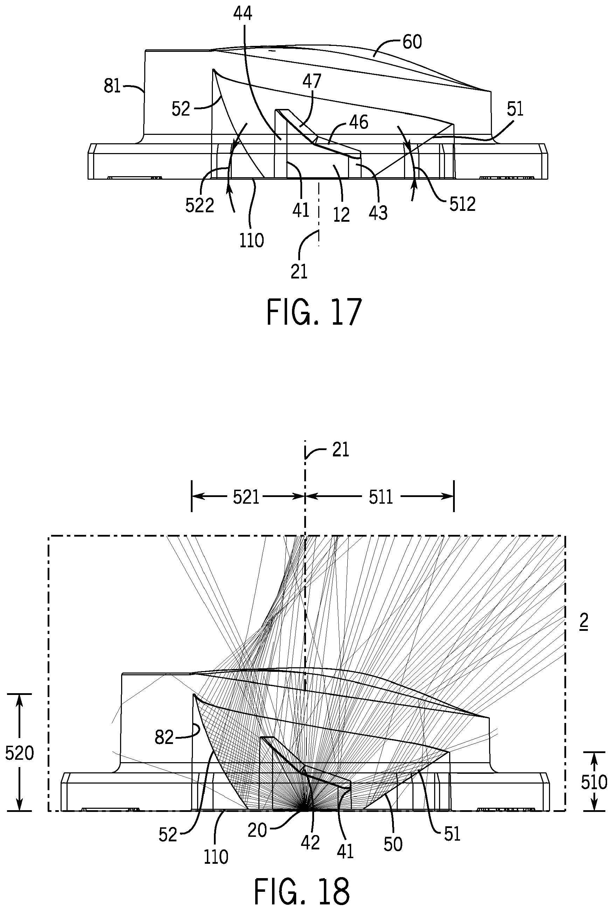

FIGURES 1-34 show aspects of an exemplary embodiment of a lens 10 in accordance with this invention. Lens 10 is configured for directing a majority of light from a light emitter 20 toward a preferential-side 2. As seen in FIGURES 16 and 18, emitter 20 has an axis 21.

The lens of this invention includes a base 11 forming an opening 30 to a cavity 12 defined by an inner surface 40, and a reflecting surface 50 positioned to reflect light received from inner surface 40 toward a main output surface 60 which is transverse axis 21. It is seen in FIGURES 15-18 that base 11 defines a plane 110 substantially normal to axis 21. FIGURES 16 and 18 show opening 30 receiving emitter 20 therethrough such that cavity 12 surrounds emitter 20.

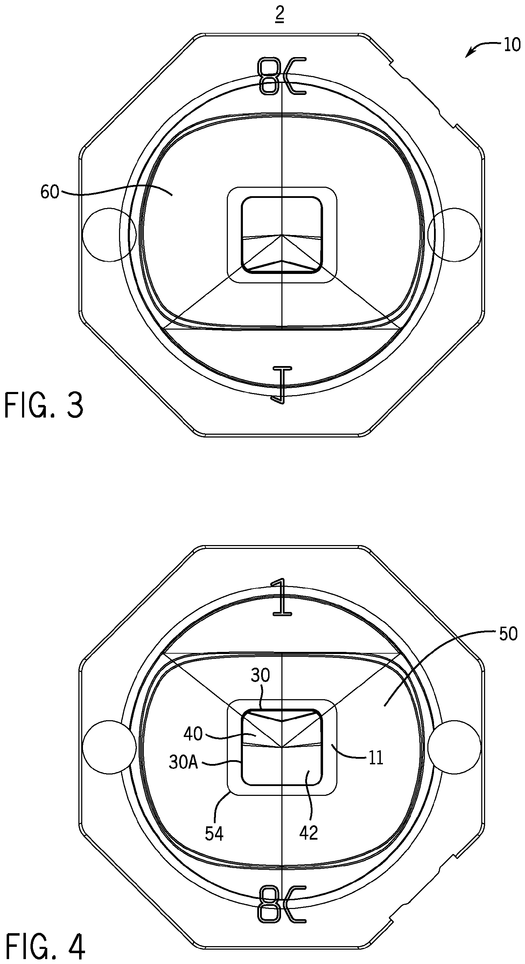

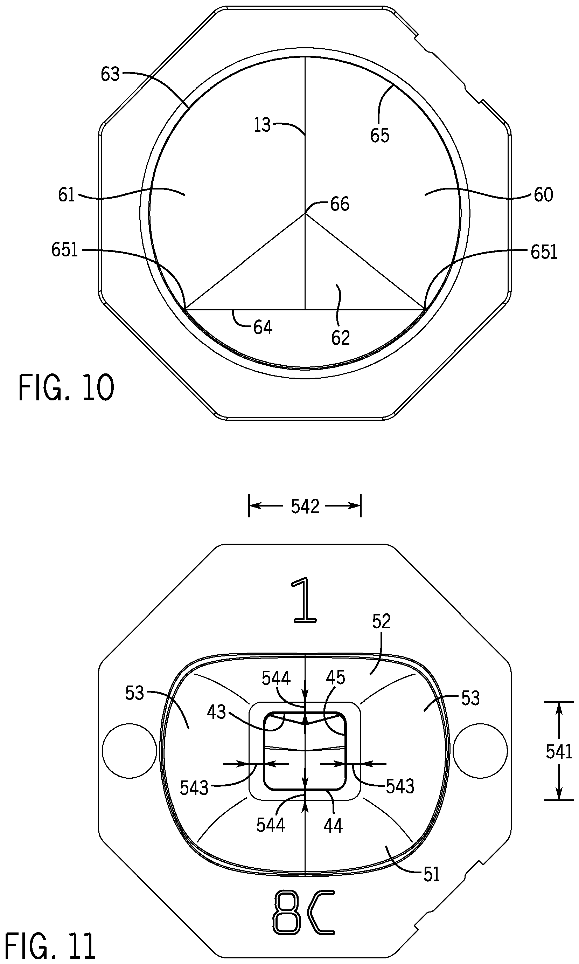

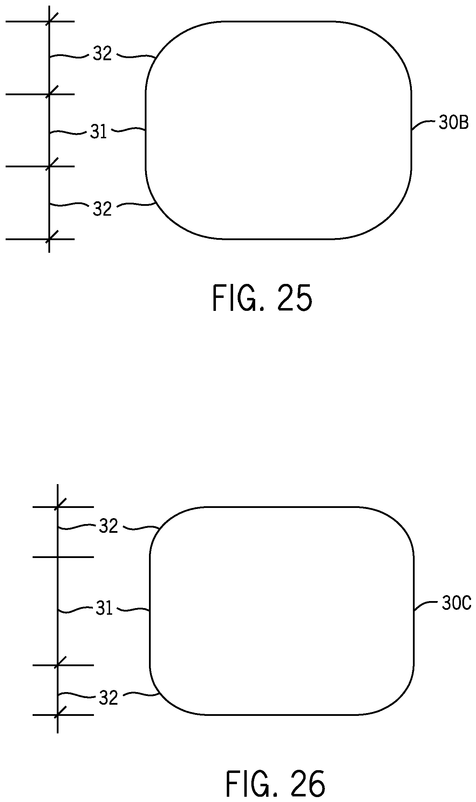

FIGURES 4, 11, 25 and 26 show cavity opening 30 substantially rectangular with four sides. In FIGURES 4 and 11, cavity opening 30A has about two-thirds of the cross-dimension of each side being straight. FIGURE 25 shows substantially rectangular cavity opening 30B with about one-third of the cross-dimension of each side of the cavity opening being straight 31 between curved corners 32. And, FIGURE 26 shows substantially rectangular cavity opening 30C with about half of the cross-dimension of each side being substantially straight 31 between curved corners 32.

FIGURES 1-18 illustrate inner surface 40 configured for primarily refracting emitter light and includes a surrounding inner surface 41 which extends from opening 30 and terminates at an inner end surface 42 which is transverse axis 21 and is positioned to refract light from emitter 20 toward preferential side 2, as best seen in FIGURE 18.

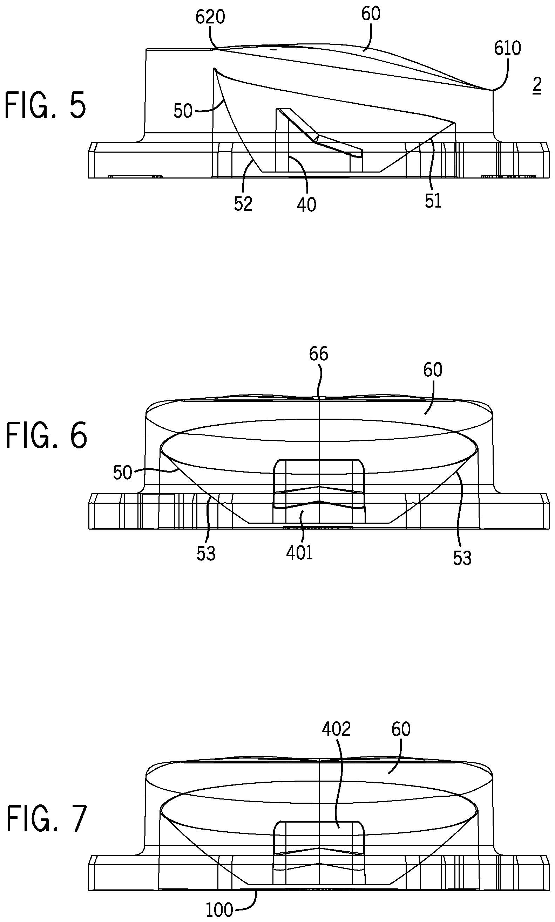

FIGURES 1, 2, 5-7, 9, 11 and 15-18 show that reflecting surface 50 extends from base 11 away from axis 21 radially outwardly of and around inner surface 40. Reflecting surface 50 includes front and back curvatures 51 and 52 and a pair of substantially-identical lateral curvatures 53 each adjoining front and back curvatures 51 and 52. It is further seen in FIGURES 5, 17 and 18 that front curvature 51 has a front-curvature configuration which differs from the configuration of back curvature 52. FIGURES 17 and 18 show that back curvature 52 terminates at greater distances 520 from base plane 110 than distances 510 at which front curvature 51 terminates from base plane 110. FIGURES 4, 5, 11, 17 and 18 also show that front curvature 51 terminates at greater distances 511 from emitter axis 21 than distances 521 at which back curvature 52 terminates from emitter axis 21 such that back curvature extends at a greater angle 522 with respect to plane 110 than an angle 512 between front curvature 51 and base plane 110. FIGURES 4 and 11 show front and back curvatures 51 and 52 each bilaterally symmetric.

FIGURES 6, 15 and 16 show that configuration of lateral curvatures 53 differ from configurations of front and back curvatures 51 and 52. FIGURES 15-18 show reflecting surface 50 being convex and extending from a base edge 54 toward main output surface 60.

FIGURES 2, 4, 9 and 11 illustrate substantially rectangular cavity opening 30 and base edge 54 substantially equidistantly spaced along each side of cavity opening 30 such that base edge 54 of reflecting surface 50 is also substantially rectangular around substantially rectangular cavity opening 30. It is also seen in FIGURES 4 and 11 that base edge 54 has a side-to-side dimension 542 which is greater than a front-to-back dimension 541. Figures 4 and 11 show opening 30 substantially square with the spacing 543 of base edge 54 from cavity opening 30 laterally being greater than spacing 544 forwardly and rearwardly such that front and back curvatures 51 and 52 extend from longer sides of base edge 54 than do lateral curvatures 53.

It is further seen in FIGURES 15-18 that surrounding inner surface 42 extends from opening 30 substantially parallel to emitter axis 21. FIGURES 11 and 15-18 best show inner surrounding surface 41 including front and back portions 43 and 44 and a pair of lateral portions 45. Lateral portions 45 each extends between front portion 43 and back portion 44 and each smoothly adjoins both front and back portions 43 and 44. FIGURE 18 show front and back portions 43 and 44 receiving emitter light which is emitted forward and rearward. The front and back portions 43 and 44 refract such emitter light away from axis 21 toward front and back curvatures 51 and 52, respectively, of reflecting surface 50. FIGURE 16 shows lateral portions 45 each receiving lateral emitter light and refract such light away from emitter axis 21. FIGURES 5-7, 11 and 15-18 illustrate inner end surface 41 extending between front and back edges 401 and 402. It is best seen in FIGURES 5-7 and 15- 18 that back edge 402 is farther from plane 110 than front edge 401. It is further best seen in FIGURES 1-4, 9 and 15-18 that inner end surface 42 includes front and back facets 46 and 47 angled with respect to one another and each extending from the respective one of front and back edges 401 and 402 to a centrally-located side-to-side juncture 48. Front and back facets 46 and 47 are shown substantially planar. It is seen in FIGURE 18 that such angled configuration of end surface 41 provides uniform distribution of light emitted within about 30° angle around emitter axis 21 and removing so-called hot spots along axis 21 by spreading the light away from the hot spot location immediately about axis 21.

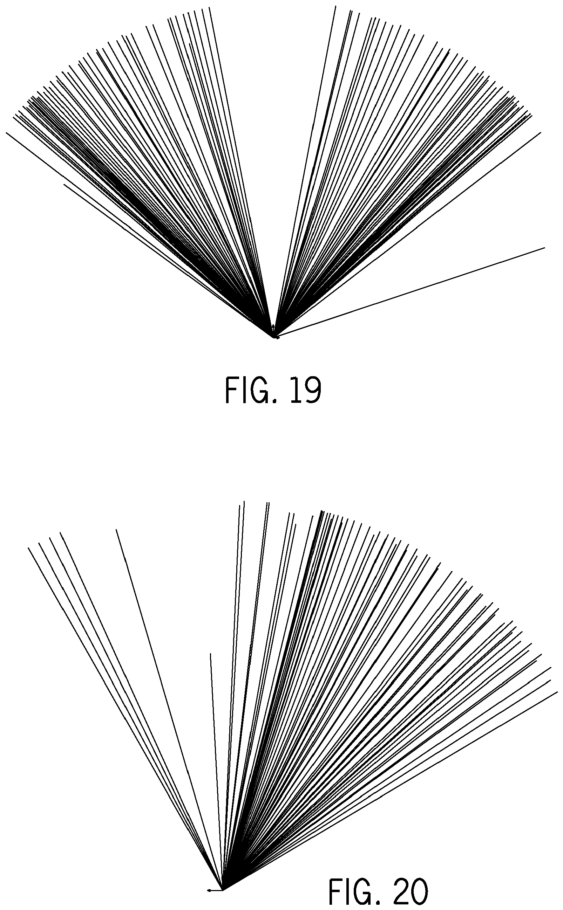

FIGURES 1, 2, 4, 9, 15 and 16 show that inner end surface 42 includes a pair of each of front and back facets 46 and 47. Facets of each pair are adjoined along a centrally-located front-to-back juncture 49 and extend from front-to-back juncture 49 toward base 11. It is seen in FIGURE 16 that such lateral angled configuration of the pairs of front and back facets 46 and 47, *i.e.,* the facets extending down from front-to-back juncture 49 when lens 10 is oriented with emitter 20 emitting light upwardly, provides lateral spread of light emitted within about 50° angle around emitter axis 21, thereby providing broad light distribution (schematically shown in FIGURE 19) beneficial for elongate illumination patterns as those required for illuminating front lines of automotive-sale parking lots.

FIGURES 1, 3, 5-8, 10 and 12-18 show main output surface 60 configured for directing light toward preferential side 2. Main output surface 60 includes front and back sectors 61 and 62. FIGURES 1, 3, 8 and 10 show front sector 61 spanning greater than 180° about emitter axis 21. These FIGURES also show front and back sectors 61 and 62 each bilaterally symmetric along a front-to-back plane 13 which includes emitter axis 21.

FIGURES 5, 12, 17 and 18 best illustrate main output surface 60 disposed at distances from base plane 110 which are greatest along the back 620 of back sector 62 and gradually decrease toward the front 610 of front sector 61. As seen in FIGURE 18, the angling of main output surface 60 toward preferential side 2 facilitates refraction of light received from inner surface 40 and reflecting surface 50 by main output surface 60 toward preferential side 2, as schematically illustrated in FIGURE 20.

Main output surface 60 has an edge 63 which includes back-sector and front-sector edge portions 64 and 65. Figures 3 and 10 show a projection of front-sector edge portion 65 on base plane 110 extending along a circle. The back-sector edge portion is shown substantially linear and extending between the ends 651 of front-sector edge portion 65.

Main output surface is shown to include a singularity point 66 on front-to-back plane 13. It is best seen in FIGURES 15 and 16 that front sector 61 includes a convex curvature extending from singularity point 66 and FIGURE 6 best shows that back sector 62 includes a convex curvature extending from singularity point 66. FIGURES 1, 3, 8 and 10 best show back sector 62 adjoining front sector 61 along planes 67 each of which includes singularity point 66 and one of ends 651 of front-sector edge portion 65.

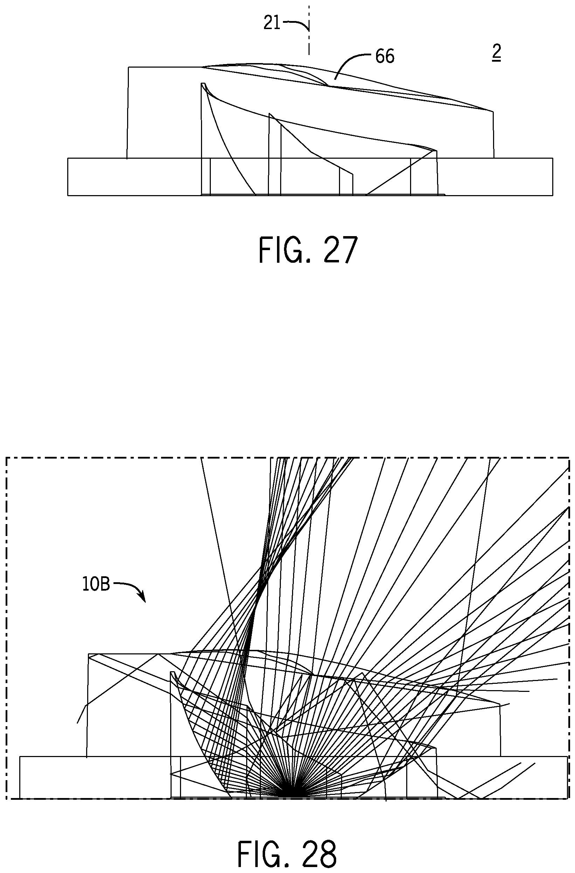

FIGURES 27 and 28 illustrate lens 10B which has singularity point 66 offset from emitter axis 21 toward preferential side 2.

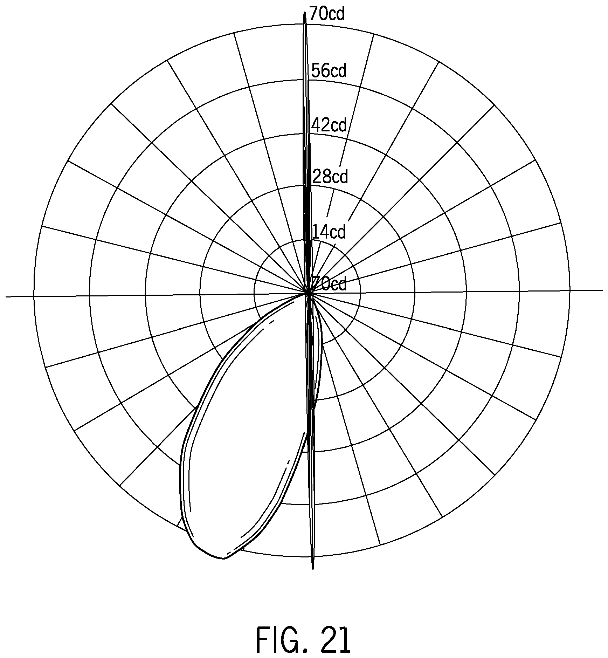

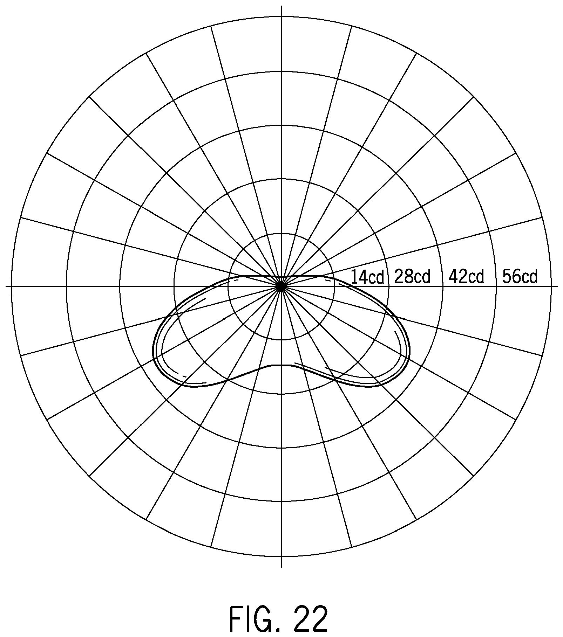

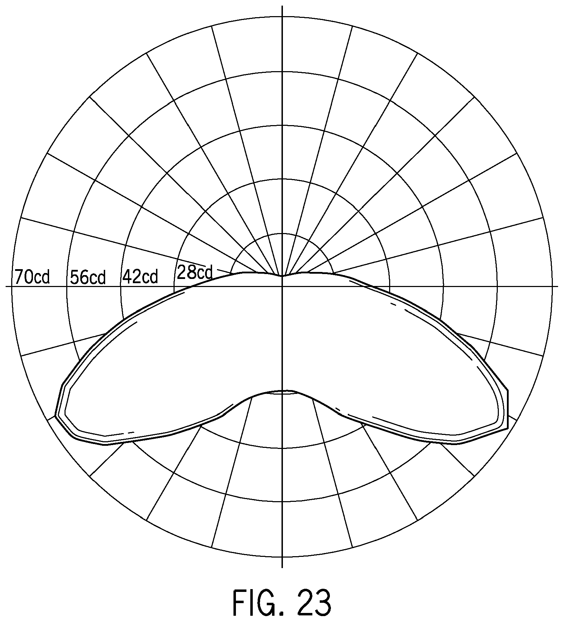

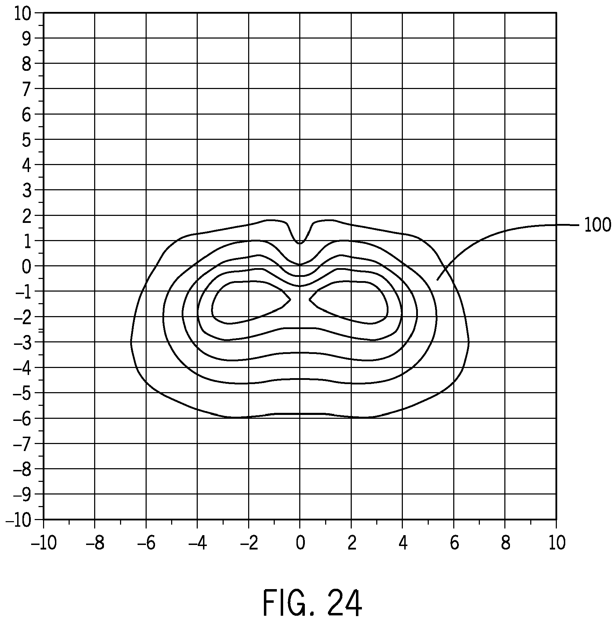

FIGURES 21-24 illustrate preferential-side light distribution by inventive lens 10. FIGURE 21 show an exemplary side view of a three-dimensional polar intensity distribution by inventive lens 10 illustrating minimizing back light with a desirable cut-off at a light pole location 18 with maximum forward illumination. FIGURE 21 shows the main beam at 25° which is a desirable orientation for illumination of the automotive front line and minimal light directed beyond the front line. FIGURES 22 and 23 illustrate exemplary top and bottom views of the three-dimensional polar intensity distribution by inventive lens 10 and show a 60° lateral spread of light which creates an elongate illumination pattern 100, an example of which is illustrated in FIGURE 24. Such elongate preferential-side illumination pattern 100 is desired for applications along the front line of automotive-sale parking lots or for illumination single-line streets.

FIGURES 1, 5-8 and 12-18 show lens 10 further including an outer surrounding wall 80 with an outer surrounding-wall surface 81 extends from main output surface 60 toward base plane 110. FIGURES 3-7 illustrate outer surrounding-wall surface 81 as substantially cylindrical and substantially parallel to emitter axis 21. Outer surrounding-wall surface 81 is shown to have a right cylindrical shape of substantially circular cross-section taken in planes parallel to base plane 110. FIGURES 15-18 show an inner side 82 of outer surrounding wall 80 extending from reflecting surface 50 toward plane 110 substantially orthogonally to main plane 110. Inner side 82 is shown substantially cylindrical and having an elongate cross-section taken in planes parallel to base plane 110, as seen in FIGURES 4 and 11. Inner side 82 of outer surrounding wall 80 is shown elongate in the side-to-side direction such that an inner-side side-to-side dimension is greater than its front-to-back dimension which follows the configuration of reflecting surface 50.

It should be understood that many other configurations for the outer surrounding wall are possible, including without limitation surfaces generated by movement of a line which is other than straight. In some examples, outer surrounding-wall surface 81 may have various annular shapes, including shapes having different cross-sectional configurations at different positions therealong or may be angled with respect to the emitter axis.

An outward flange 15 is shown to extend from outer surrounding-wall surface 81 away from emitter axis 21. Flange 15 is shown as having octagonal perimeter which facilitates mounting of the lens during light-fixture assembly. Flange 15 best shown in FIGURES 1, 2, 3 and 4 also has a lens-type-identifying marking 16 and a locator label 17 which references the lens location in an LED-array module. An orientation between marking 16 and label 17 indicates preferential side 2 of light distribution 100 shown in FIGURE 24. These markings are preferably readable by robotic equipment for correct lens placement and orientation during light-fixture assembly. FIGURES 15 and 17 show flange 15 extending beyond base plane 11 with respect to emitter axis 21 in a direction opposite the light emission. FIGURES 16 and 18 show that such spacing allows positioning of plane 11 at the same level with the LED(s) of emitter 20 for most efficient capturing of emitter light.

It should be noted that inventive lens 10 has the configuration which is described above and which allows for molding of lens 10 in a single-piece mold. In other words, the lens configuration preferably permits easy removal of the lens from the mold without the need for separating the mold pieces as is the case with some lenses that require multiple-piece molds. The inventive lens can be simply pulled out of the mold.

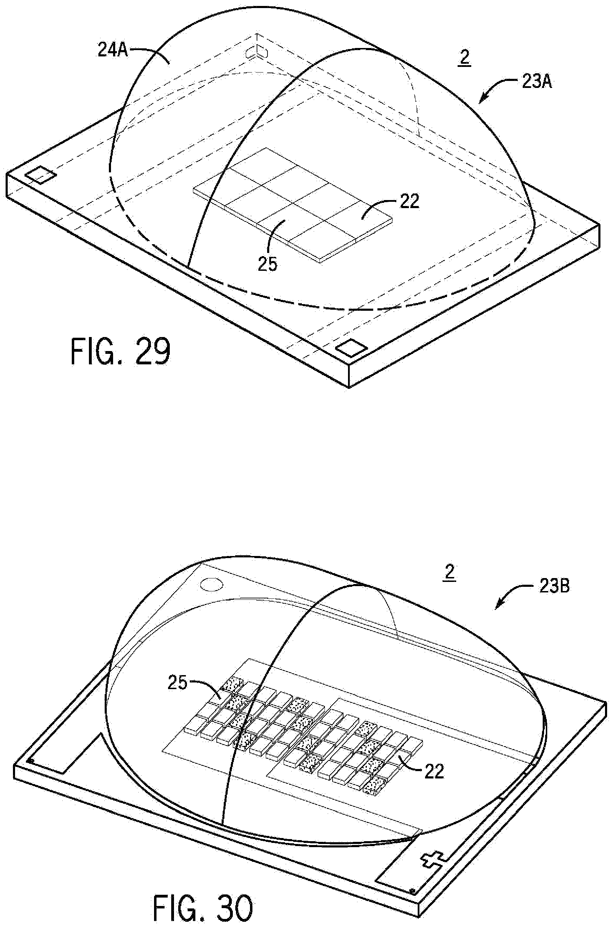

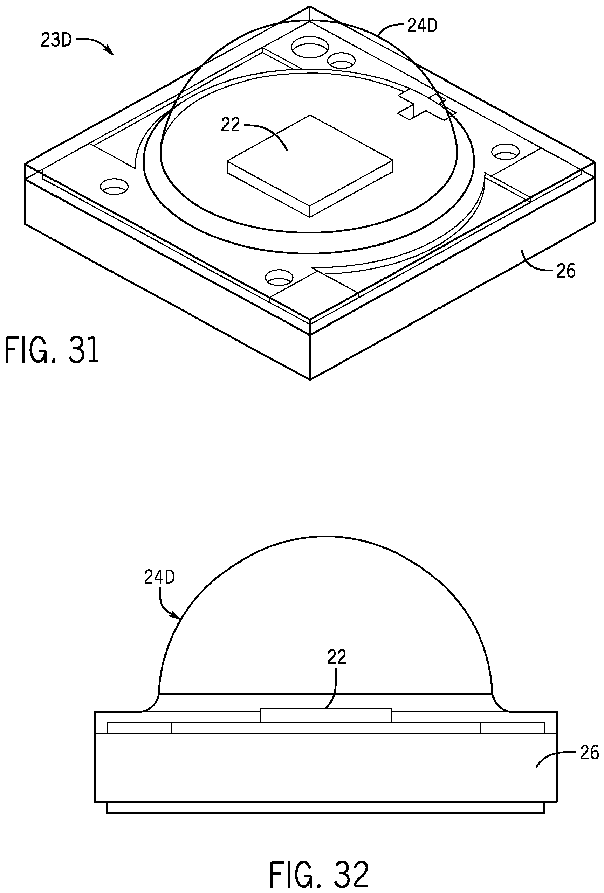

FIGURES 29-34 show emitter 20 including at least one light-emitting diode (LED) 22. Light emitter 20 may include an LED package 23 which has a primary lens 24 over the at least one LED 22. In such embodiments, inventive lens 10 is a secondary lens placed over primary lens 24. Light emitter 20 may be of the type illustrated in FIGURES 31-33 which show LED package 23D with single LED 22 on a submount 26 and hemispheric primary lens 24D coaxially overmolded on submount 26 over LED 22.

FIGURES 29 and 30 illustrate exemplary LED packages 23A and 23B each including an array of LEDs 22 on an LED-populated area 25 which has an aspect ratio greater than 1, and primary lens 24 being overmolded on a submount 20 over LED-populated area 25. It is seen in FIGURE 30 that the array may include LEDs 22 emitting different-wavelength light of different colors such as including red LEDs along with light green or other colors to achieve natural white light. Light emitters of the type as LED packages 23A and 23B are described in detail in Application Serial No. 13/441,558, filed on April 6, 2012, and in Application Serial No. 13/441,620, filed on April 6, 2012. Contents of both applications are incorporated herein by reference in their entirety.

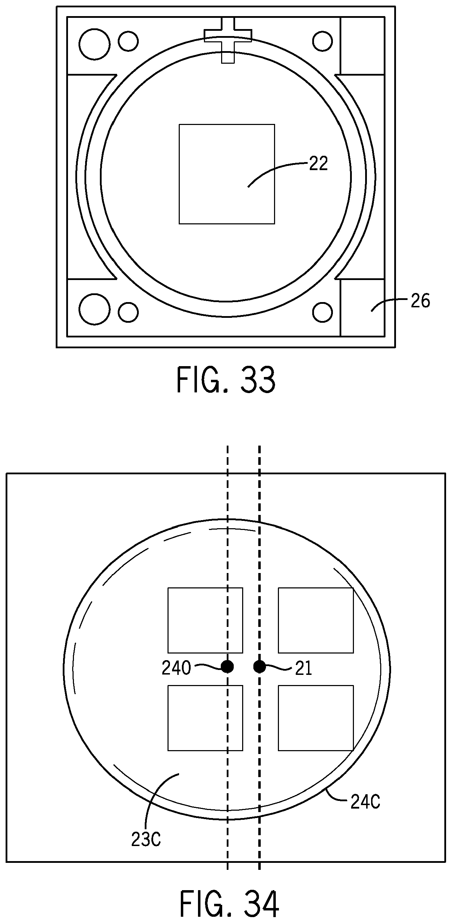

FIGURES 29, 30 and 34 illustrate versions of LED light emitter 20 configured to refract LED-emitted light toward a preferential direction 2. In each LED package 23A, 23B and 23C, each LED array defines emitter axis 21. FIGURES 29 and 30 illustrate primary lens 24A configured to refract LED-emitted light toward preferential side 2. FIGURE 34 shows hemispheric primary lens 24C having a centerline 240 offset from emitter axis 21. It should be understood that for higher efficiency LED emitter 20 may have primary-lens having both its centerline offset from the emitter axis and also being shaped for refraction of LED-emitted light toward preferential side 2. In FIGURES 29 and 30, primary lens 24A is shown asymmetric.

In fixtures utilizing a plurality of emitters, a plurality of LEDs or LED arrays may be disposed directly on a common submount in spaced relationship between the LEDs or LED arrays each of which is overmolded with a respective primary lens. This type of LED emitters is sometimes referred to as chip-on-board LEDs. In such embodiments, a plurality of inventive lenses 10 are utilized with each lens 10 being positioned over a respective one of the primary lenses. The plurality of lenses 10 may be molded as a single piece which my have a single flange surrounding each of the plurality of lenses 10.

## Claims

1. A lens (10) for preferential-side distribution of light from a light emitter (20) having an axis (21), the lens (10) comprising:
a base (11) forming a substantially rectangular opening (30) with four sides (31) to an emitter cavity (12) defined by an inner surface (40);
a main output surface (60) transverse the axis (21) and directing light toward the preferential side (2); and
a reflecting surface (50) positioned to reflect light received from the inner surface (40) toward the main output surface (60),
**characterized in that**
each side (31) of the opening (30) is straight between curved corners (32).

2. The lens (10) of claim 1 wherein the light emitter (20) includes at least one LED (22).

3. The lens (10) of claim 2 wherein at least about half of the cross-dimension of each side of the cavity (12) opening (30) is straight.

4. The lens (10) of claim 3 wherein at least about two-thirds of the cross-dimension of each side of the cavity (12) opening (30) is straight.

5. The lens (10) of claim 2 wherein the inner surface (40) includes a surrounding inner surface (41) extending from the opening (30) substantially parallel to the emitter axis (21).

6. The lens (10) of claim 5 wherein:
the base (11) defines a plane substantially normal to the axis (21); and
the surrounding inner surface (41) terminates at an inner end surface (42) which extends between front and back edges (401, 402), the back edge (402) being farther from the plane than the front edge (401).

7. The lens (10) of claim 6 wherein the inner surface (40) includes front and back facets (46, 47) angled with respect to one another and each extending from the respective one of the front and back edges (401, 402) to a centrally-located side-to-side juncture (48).

8. The lens (10) of claim 7 wherein the inner end surface (42) includes a pair of each of the front and back facets (46, 47), the facets of each pair being adjoined along a centrally-located front-to-back juncture (49) and extending from the front-to-back juncture (49) toward the base (11).

9. The lens (10) of claim 8 wherein the front and back facets (46, 47) are substantially planar.

10. The lens (10) of claim 2 wherein the main output surface (60) includes front and back sectors (61, 62), the front sector (61) spanning greater than 180° about the emitter axis (21).

11. The lens (10) of claim 10 wherein:
the base (11) defines a base plane substantially normal to the axis (21);
the main output surface (60) has an edge (63) including back-sector and front-sector portions (64, 65);
a projection of the front-sector edge portion (65) on the base (11) plane extends along a circle; and
the back-sector edge portion (64) is substantially linear and extends between the ends of the front-sector edge portion (65).

12. The lens (10) of claim 11 wherein:
the main output surface (60) includes a singularity point (66) on a front-to-back plane (13) which includes the emitter axis (21);
the front sector (61) includes a convex curvature extending from the singularity point (66); and
the back sector (62) includes a convex curvature extending from the singularity point (66), the back sector (62) adjoining the front sector (61) along planes (67) each of which includes the singularity point (66) and one of the ends (651) of the front-sector edge portion (65).

13. The lens (10) of claim 12 wherein the singularity point (66) is offset from the emitter axis (21) toward the preferential side (2).

14. The lens (10) of claim 2 wherein the reflecting surface (50) includes front and back curvatures (51, 52) and a pair of substantially-identical lateral curvatures (53) each adjoining the front and back curvatures (51, 52), a configuration of the lateral curvatures (53) differing from configurations of the front and back curvatures (51, 52) which differ from one another.

15. The lens (10) of claim 2 being bilaterally symmetric in a front-to-back direction.

## Patentansprüche

1. Linse (10) für bevorzugte Seitenverteilung von Licht von einem Lichtemitter (20) mit einer Achse (21), wobei die Linse (10) aufweist:
eine Basis (11), die eine im Wesentlichen rechteckförmige Öffnung (30) mit vier Seiten (31) zu einem Emitter-Hohlraum (12) hin bildet, der durch eine Innenoberfläche (40) definiert wird;
eine Haupt-Abgabefläche (60), die quer zur Achse (21) verläuft und die Licht in Richtung der bevorzugten Seite (2) lenkt; und
eine Reflexionsfläche (50), die so angeordnet ist, um Licht, das von der Innenoberfläche (40) empfangen wird, zur Haupt-Abgabefläche (60) zu reflektieren,
**dadurch gekennzeichnet, dass**
jede Seite (31) der Öffnung (30) zwischen bogenförmigen Eckbereichen (32) gerade verläuft.

2. Linse (10) nach Anspruch 1, wobei der Lichtemitter (20) mindestens eine LED (22) umfasst.

3. Linse (10) nach Anspruch 2, wobei mindestens in etwa die Hälfte der Querabmessung einer jeden Seite der Öffnung (30) des Hohlraums (12) gerade verläuft.

4. Linse (10) nach Anspruch 3, wobei mindestens in etwa zwei Drittel der Querabmessung einer jeden Seite der Öffnung (30) des Hohlraums (12) gerade verläuft.

5. Linse (10) nach Anspruch 2, wobei die Innenoberfläche (40) eine umgebende Innenoberfläche (41) umfasst, die sich von der Öffnung (30) im Wesentlichen parallel zur Emitter-Achse (21) erstreckt.

6. Linse (10) nach Anspruch 5, wobei:
die Basis (11) eine Ebene definiert, die im Wesentlichen senkreckt zur Achse (21) verläuft; und
die umgebende Innenoberfläche (41) an einer inneren Endfläche (42) endet, die sich zwischen vorderen und hinteren Flanken (401, 402) erstreckt, wobei die hintere Flanke (402) weiter von der Ebene als die vordere Flanke (401) entfernt ist.

7. Linse (10) nach Anspruch 6, wobei die Innenoberfläche (40) vordere und hintere Facetten (46, 47) aufweist, die zueinander in einem Winkel angeordnet sind und die sich jeweils von der jeweiligen vorderen bzw. hinteren Flanke (401, 402) zu einem zentral befindlichen Seite-zu-Seite-Verbindungsabschnitt (48) erstrecken.

8. Linse (10) nach Anspruch 7, wobei die innere Endfläche (42) ein Paar vorderer und ein Paar hinterer Facetten (46, 47) aufweist, wobei die Facetten eines jeden Paares entlang eines zentral befindlichen Vorne-nach-Hinten-Verbindungsabschnitts (49) aneinander grenzen und sich von dem Vorne-nach-Hinten-Verbindungsabschnitt (49) zur Basis (11) erstrecken.

9. Linse (10) nach Anspruch 8, wobei die vorderen und hinteren Facetten (46, 47) im Wesentlichen in einer Ebene liegend angeordnet sind.

10. Linse (10) nach Anspruch 2, wobei die Haupt-Abgabefläche (60) vordere und hintere Sektoren (61, 62) umfasst, wobei sich der vordere Sektor (61) über mehr als 180° um die Emitter-Achse (21) erstreckt.

11. Linse (10) nach Anspruch 10, wobei:
die Basis (11) eine Basisebene definiert, die im Wesentlichen senkrecht zur Achse (21) ist;
die Haupt-Abgabefläche (60) einen Rand (63) hat, der einen Hintersektor-Abschnitt (64) und einen Vordersektor-Abschnitt (65) umfasst;
sich ein Vorsprung des Vordersektor-Randabschnitts (65) an der Ebene der Basis (11) entlang eines Kreises erstreckt; und
der Hintersektor-Randabschnitt (64) im Wesentlichen gerade verläuft und sich zwischen den Enden des Vordersektor-Randabschnitts (64) erstreckt.

12. Linse (10) nach Anspruch 11, wobei:
die Haupt-Abgabefläche (60) einen Einzelpunkt (66) an einer Vorne-nach-Hinten-Ebene (13), die die Emitter Achse (21) enthält, umfasst;
der vordere Sektor (61) eine konvexe Krümmung aufweist, die sich von dem Einzelpunkt (66) erstreckt; und
der hintere Sektor (62) eine konvexe Krümmung aufweist, die sich von dem Einzelpunkt (66) erstreckt, wobei der hintere Sektor (62) an dem vorderen Sektor (61) entlang von Ebenen (67) angrenzt, die jeweils den Einzelpunkt (66) und eines der Enden (651) des Vordersektor-Randabschnitts (65) enthalten.

13. Linse (10) nach Anspruch 12, wobei der Einzelpunkt (66) von der Emitter-Achse (21) in Richtung zur bevorzugten Seite (2) versetzt ist.

14. Linse (10) nach Anspruch 2, wobei die Reflexionsfläche (50) vordere und hintere Krümmungen (51, 52) und ein Paar von im Wesentlichen identischen, quer verlaufenden Krümmungen (53) aufweist, die jeweils an den vorderen und hinteren Krümmungen (51, 52) angrenzen, wobei sich eine Konfiguration der quer verlaufenden Krümmungen (53) von Konfigurationen der vorderen und hinteren Krümmungen (51, 52) unterscheidet.

15. Linse (10) nach Anspruch 2, wobei die Linse in einer Vorne-nach-Hinten-Richtung disymmetrisch ist.

## Revendications

1. Lentille (10) pour distribution latérale préférentielle de la lumière à partir d'un émetteur de lumière (20) définissant un axe (21), ladite lentille (10) comprenant :
une base (11) formant une ouverture sensiblement rectangulaire (30) avec quatre côtés (31) sur une cavité d'émetteur (12) définie par une surface interne (40),
une surface de sortie principale (60) coupant l'axe (21), et dirigeant la lumière vers le côté préférentiel (2) et
une surface réfléchissante (50) disposée de façon à réfléchir la lumière reçue en provenance de la surface interne (40) en direction de la surface de sortie principale (60),
**caractérisée en ce que**
chaque côté (31) de l'ouverture (30) est droit entre des coins incurvés (32).

2. Lentille (10) selon la revendication 1, dans laquelle l'émetteur de lumière (20) comporte au moins une LED (22).

3. Lentille (10) selon la revendication 2, dans laquelle au moins environ la moitié de la dimension transversale de chaque côté de l'ouverture (30) de la cavité (12) est droite.

4. Lentille (10) selon la revendication 3, dans laquelle au moins environ les deux tiers de la dimension transversale de chaque côté de l'ouverture (30) de la cavité (12) sont droits.

5. Lentille (10) selon la revendication 2, dans laquelle la surface interne (40) comporte une surface interne environnante (41) s'étendant entre l'ouverture (30) sensiblement parallèle et l'axe de l'émetteur (21) .

6. Lentille (10) selon la revendication 5, dans laquelle :
la base (11) définit un plan sensiblement perpendiculaire à l'axe (21) et
la surface interne environnante (41) se termine au niveau d'une surface d'extrémité interne (42) qui s'étend entre les bords antérieur et postérieur (401, 402), le bord postérieur (402) étant plus éloigné du plan que le bord antérieur (401).

7. Lentille (10) selon la revendication 6, dans laquelle la surface interne (40) comporte des facettes antérieure et postérieure (46, 47) qui forment un angle, l'une par rapport à l'autre, et chacune s'étendant entre l'un des bords antérieur et postérieur (401, 402) respectifs, jusqu'à une jonction côte à côte située au centre (48).

8. Lentille (10) selon la revendication 7, dans laquelle la surface d'extrémité interne (42) comporte une paire de chacune des facettes antérieure et postérieure (46, 47), les facettes de chaque paire se rejoignant le long d'une jonction avant-arrière située au centre (49) et s'étendant à partir de la jonction avant-arrière située au centre (49) en direction de la base (11).

9. Lentille (10) selon la revendication 8, dans laquelle les facettes antérieure et postérieure (46, 47) sont sensiblement planes.

10. Lentille (10) selon la revendication 2, dans laquelle la principale surface de sortie (60) comporte des secteurs antérieur et postérieur (61, 62), le secteur antérieur (61) couvrant plus de 180° autour de l'axe de l'émetteur (21).

11. Lentille (10) selon la revendication 10, dans laquelle :
la base (11) définit un plan de base sensiblement perpendiculaire à l'axe (21),
la principale surface de sortie (60) possède un bord (63) comportant des parties de secteur postérieur et de secteur antérieur (64, 65),
une projection de la partie de bord de secteur antérieur (65) sur le plan de la base (11) s'étend suivant un cercle et
la partie de bord de secteur postérieur (64) est sensiblement linéaire et s'étend entre les extrémités de la partie de bord de secteur antérieur (65).

12. Lentille (10) selon la revendication 11, dans laquelle :
la principale surface de sortie (60) comporte un point de singularité (66) sur un plan avant-arrière (13) qui comporte l'axe de l'émetteur (21),
le secteur antérieur (61) comporte une courbure convexe qui s'étend à partir du point de singularité (66) et
le secteur postérieur (62) comporte une courbure convexe qui s'étend à partir du point de singularité (66), le secteur postérieur (62) rejoignant le secteur antérieur (61) le long de plans (67) dont chacun comporte le point de singularité (66) et l'une des extrémités (651) de la partie de bord du secteur antérieur (65).

13. Lentille (10) selon la revendication 12, dans laquelle le point de singularité (66) est décalé à partir de l'axe de l'émetteur (21) en direction du côté préférentiel (2).

14. Lentille (10) selon la revendication 2, dans laquelle la surface réfléchissante (50) comporte des courbures antérieure et postérieure (51, 52) et une paire de courbures latérales sensiblement identiques (53), chacune rejoignant des courbures antérieure et postérieure (51, 52), une configuration des courbures latérales (53) étant différente des configurations des courbures antérieure et postérieure (51, 52) qui diffèrent l'une de l'autre.

15. Lentille (10) selon la revendication 2, qui est symétrique, bilatéralement, dans la direction avant-arrière.
